# EUROPEAN PATENT SPECIFICATION

(11) **EP 4 124 477 B1**
(45) Date of publication and mention of the grant of the patent: **25.09.2024**
(21) Application number: 22171971.9
(22) Date of filing: 06.05.2022
(51) Int. Cl.: B60D 1/54, B60D 1/06, B60D 1/26

(54) **TRAILER HITCH COUPLER**
ANHÄNGERKUPPLUNG
COUPLEUR D'ATTELAGE DE REMORQUE

(30) Priority: 26.07.2021 CN 202110841954; 19.11.2021 CN 202111390181
(43) Date of publication of application: 01.02.2023
(73) Proprietor: Zhejiang Zhiyou Automotive Technology Co., Ltd., Zhejiang, Shaoxing 312500 (CN)
(72) Inventor: Xu, Naiyong, Shaoxing, 312500 (CN); Wang, Yu, Shaoxing, 312500 (CN); Shao, Junjian, Shaoxing, 312500 (CN); Xuan, Quanli, Shaoxing, 312500 (CN); Zhang, Dongyu, Shaoxing, 312500 (CN); Zhu, Fengdong, Shaoxing, 312500 (CN); Han, Zhengxin, Shaoxing, 312500 (CN); Liu, Ya, Shaoxing, 312500 (CN); Li, Tao, Shaoxing, 312500 (CN); Ding, Wenbing, Shaoxing, 312500 (CN); Sun, Lingxin, Shaoxing, 312500 (CN)
(74) Representative: karo IP

(56) References cited:
- EP-A1- 1 637 364
- EP-A2- 1 142 732
- WO-A1-2018/133888
- DE-A1- 102020 131 748

## Description

### FIELD OF TECHNOLOGY

The present disclosure relates to a trailer hitch coupler of the kind comprising a body secured to a vehicle body and a hitch, wherein the body comprises a driving shaft, a locking member, a transmission disc, and a driven shaft, wherein the driven shaft is connected to and rotates synchronously with the hitch, and the driving shaft actuates the transmission disc to idle such that the locking member unlocks the driven shaft to rotate or locks the driven shaft from rotation; wherein when the locking member unlocks the driven shaft to rotate, the driving shaft actuates, via the transmission disc, the driven shaft to rotate such that the hitch switches between a folded position and a unfolded position; and when the hitch is at the folded position or at the unfolded position, the locking member locks the driven shaft from rotation. Such a trailer hitch coupler will be called "a trailer hitch coupler of the kind referred to" in the following description.

### BACKGROUND

People's demands on vehicle hitching performance increase with their pursuit of a more diversified way of life. A conventional trailer hitch coupler additionally mounted to a vehicle comprises a body and a hitch, wherein the body is secured on a vehicle body of the vehicle; a rotating shaft for actuating the hitch to rotate synchronously is provided on the body. Dependent on actual needs, the hitch is rotated beneath the vehicle body to a folded position or rotated out of the vehicle body to an unfolded position for hitching.

However, in the prior art, the locking mechanism to lock the rotating shaft to prevent it from rotation when the hitch is in the unfolded position or in the folded position does not prevent sway of the hitch when the hitch is in the unfolded position and the folded position, which deteriorates hitching performance of the trailer hitch coupler.

Prior art trailer hitches are disclosed in documents DE 10 2020 131748 A1, WO2018/133888 A1, EP 1 637 364 A1 and EP 1 142 732 A2.

### SUMMARY

The invention is set out in the appended set of claims.

To overcome the above and other drawbacks in the prior art, embodiments of the present disclosure provide a trailer hitch coupler with good hitching performance, which can lock a hitch at a folded position and an unfolded position so as to prevent sway of the hitch, thereby enhancing hitching performance of the trail hitch coupler.

To solve the above technical problem, the present invention adopts the following technical solution:
In a trailer hitch coupler of the kind referred to, the locking member is a rotatably mounted claw, a driving slot is provided on the transmission disc, and a locking slot is provided on the driven shaft, such that when the claw is snapped into the driving slot and the locking slot, the claw locks the driven shaft from rotation; and when the transmission disc rotates to release the claw out of the driving slot and the locking slot, the claw unlocks the driven shaft to rotate.

Furthermore, the claw is provided with a torsion spring configured to drive the claw to reset; and after the claw is reset, the claw is snapped into the driving slot and the locking slot.

Furthermore, the locking slot is an arc-shaped slot, and the claw is a sectorial plate, wherein an arc-shaped surface of the sectorial plate matches the arc-shaped slot; the driving slot is a trapezoidal slot, wherein an opening of the trapezoidal slot is gradually enlarged radially outwardly; or, the arc-shaped surface of the sectorial plate is provided with teeth, and a toothed slot engaged with the teeth is provided at an outer circumferential side of the transmission disc, wherein the toothed slot forms the driving slot.

Furthermore, a transmission post is provided on the transmission disc, and an arc-shaped transmitting groove is provided coaxially on the driven shaft, wherein the transmission post is inserted into the arc-shaped transmitting groove, such that when the transmission disc drives the transmission post to move from a middle portion of the arc-shaped transmitting groove to an end portion of the arc-shaped transmitting groove, the claw is released out of the driving slot and the locking slot.

Furthermore, a plurality of the driving slots are arranged at uniform intervals in the outer circumferential side of the transmission disc, and a plurality of the locking slots are provided on the driven shaft, wherein a plurality of the claws are respectively snapped into the plurality of driving slots and the plurality of locking slots so as to lock the driven shaft from rotation.

Furthermore, the body further comprises a fixed sleeve fixed relative to the vehicle body, wherein the fixed sleeve is sleeved over the driven shaft, and the locking member is rotatably mounted on an end face of the fixed sleeve.

Furthermore, a limit groove is provided at one of an inner circumferential side of the fixed sleeve and an outer circumferential side of the driven shaft, and a limit boss inserted into the limit groove is provided at the other one of the inner circumferential side of the fixed sleeve and the outer circumferential side of the driven shaft, wherein the limit boss moves between two ends of the limit groove.

Furthermore, the body comprises a housing and a motor assembly disposed in the housing, wherein the driving shaft, the transmission disc, and the locking member are disposed in the housing, and the motor assembly actuates the driving shaft to rotate; wherein one end of the driven shaft is disposed in the housing, and the other end of the driven shaft extends out of the housing to connect with the hitch.

Furthermore, the body comprises a housing that covers outside the transmission disc and the locking member, wherein one end of the driven shaft is disposed in the housing, and the other end of the driven shaft extends out of the housing to connect with the hitch; wherein one end of the driving shaft is disposed in the housing, and the other end of the driving shaft extends out of the housing.

The present disclosure offers the following beneficial effects:
In the present disclosure, when the driving shaft actuates the transmission disc to idle to cause the locking member to unlock the driven shaft to rotate or lock the driven shaft from rotation, the transmission disc is in a rotating status while the driven shaft maintains a stationary status. To use the trailer hitch coupler, the transmission disc is first actuated by the driving shaft to idle, causing the locking member to unlock the driven shaft to rotate, thereby driving the driven shaft to rotate; then, the driving shaft continues rotating to actuate, via the transmission disc, the driven shaft to rotate, wherein rotation of the driven shaft may switch the hitch from the folded position to the unfolded position; next, the driving shaft actuates the transmission disc to idle reversely so as to drive the locking member to lock the driven shaft from rotation; when the driving shaft is actuating the transmission disc to idle reversely, the driven shaft maintains stationary to keep the hitch at the unfolded position, such that after the locking member locks the driven shaft from rotation, the hitch may be locked at the unfolded position, thereby preventing sway of the hitch when a trailer is hitched, which further enhances hitching performance. Likewise, the same unlocking and locking principles apply to switching the hitch from the unfolded position to the folded position, except for a different rotating direction. Therefore, the technical solutions of the present disclosure may also lock the hitch to the folded position to prevent sway of the hitch at that position, further enhancing hitching performance of the trailer hitch coupler.

Furthermore, when the claw is snapped into the driving slot and the locking slot, the claw locks the driven shaft from rotation; and when the transmission disc rotates to release the claw out of the driving slot and the locking slot, the claw unlocks the driven shaft to rotate. With such a configuration, when the transmission disc is idling, a sidewall of the driving slot is driven to push the claw to rotate out of the driving slot and the locking slot, such that the claw unlocks the driven shaft to rotate; when the transmission disc idles reversely, the claw is reset and snapped into the driving slot and the locking slot so as to lock the driven shaft from rotation, which prevents rotation of the driven shaft.

The claw is provided with a torsion spring for driving the claw to reset; and after the claw is reset, the claw is snapped into the driving slot and the locking slot. With such a configuration, resilience of the torsion spring enables the claw to rotate to be automatically reset, thereby locking the driven shaft from rotation. This configuration offers a simple structure and facilitates assembly.

The locking slot is an arc-shaped slot; the claw is a sectorial plate, wherein an arc-shaped surface of the sectorial plate matches the arc-shaped slot; the driving slot is a trapezoidal slot, wherein an opening of the trapezoidal slot is gradually enlarged radially outwardly; or, the arc-shaped surface of the sectorial plate is provided with teeth, and a toothed slot engaged with the teeth is provided at an outer circumferential side of the transmission disc, wherein the toothed slot forms the driving slot. With such a configuration, the transmission disc may smoothly actuate the claw to rotate to be released out of the locking slot; and in a locked state, this configuration further enhances the locking effect between the claw and the locking slot.

A transmission post is provided on the transmission disc, and an arc-shaped transmitting groove is coaxially provided on the driven shaft, wherein the transmission post is inserted into the arc-shaped transmitting groove, such that when the transmission disc drives the transmission post to move from a middle portion of the arc-shaped transmitting groove to an end portion of the arc-shaped transmitting groove, the claw is released out of the driving slot and the locking slot. With such a configuration, when the transmission disc is driving the transmission post to move from the middle portion of the arc-shaped transmitting groove to the end portion of the arc-shaped transmitting groove, idling of the transmission disc may be realized, at which point the driven shaft does not rotate; when the transmission post moves to the end portion of the arc-shaped transmitting groove, the claw unlocks the driven shaft to rotate, at which point the driven shaft may rotate, whereby to continuously drive the transmission disc to rotate, enabling the transmission post to drive the driven shaft to rotate, further realizing switching of the hitch between the folded position and the unfolded position; when the transmission post is moving from the end portion of the arc-shaped transmitting groove to the middle portion of the arc-shaped transmitting groove, the transmission disc is idling, at which point the driven shaft does not rotate; when the transmission post moves to the middle portion of the arc-shaped transmitting groove, the claw locks the driven shaft from rotation.

A plurality of driving slots are arranged at uniform intervals in an outer circumferential side of the transmission disc, and a plurality of locking slots are provided on the driven shaft, wherein a plurality of claws are respectively snapped into the plurality of driving slots and the plurality of locking slots so as to lock the driven shaft from rotation. By arranging the plurality of claws in one-to-one locking fit with the plurality of locking slots, the effect of locking the driven shaft may be enhanced, thereby further preventing the hitch from sway caused by the rotation of the driven shaft.

The body further comprises a fixed sleeve fixed relative to the vehicle body, wherein the fixed sleeve is sleeved over the driven shaft, and the locking member is rotatably mounted on an end face of the fixed sleeve. With such a configuration, the driven shaft may be radially positioned via the fixed sleeve so as to ensure coaxiality between the driven shaft and the transmission disc; besides, the fixed sleeve provides a carrier for mounting the locking member, thereby simplifying the body structure.

A limit groove is provided at one of an inner circumferential side of the fixed sleeve and an outer circumferential side of the driven shaft, and a limit boss inserted into the limit groove is provided at the other of the inner circumferential side of the fixed sleeve and the outer circumferential side of the driven shaft, wherein the limit boss moves between two ends of the limit groove. Such a configuration may limit the rotating angle of the driven shaft so as to define an initial position and an end position of the driven shaft, which further ensures locking effect of the hitch at the folded position and the unfolded position.

The body comprises a housing and a motor assembly disposed in the housing, wherein the driving shaft, the transmission disc, and the locking member are disposed in the housing; the motor assembly actuates the driving shaft to rotate; one end of the driven shaft is disposed in the housing, and the other end of the driven shaft extends out of the housing to connect with the hitch. With the motor assembly actuating the driving shaft to rotate, user experience may be enhanced.

Alternatively, the body comprises a housing that covers outside the transmission disc and the locking member, wherein one end of the driven shaft is disposed in the housing, the other end of the driven shaft extends out of the housing to connect with the hitch; and wherein one end of the driving shaft is disposed in the housing, and the other end of the driving shaft extends out of the housing. With such a configuration, the driving shaft may also be actuated to rotate when a user rotates the end of the driving shaft extending out of the housing by a wrench or by bare hands, which eliminates a need for a motor assembly, thereby reducing manufacturing cost of the product; furthermore, without the motor assembly, failure of the product due to electric fault may also be avoided.

These characteristics and advantages of the present disclosure will be disclosed in detail in the detailed description and accompanying drawings below.

### BRIEF DESCRIPTION OF THE DRAWINGS

Hereinafter, the present disclosure will be described in further detail with reference to the accompanying drawings:

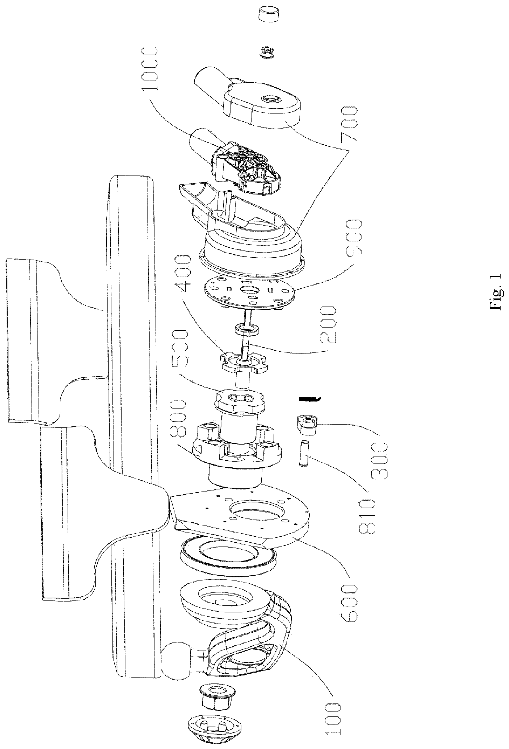

Fig. 1 is an exploded structural view of a trailer hitch coupler according to a first embodiment of the present disclosure;

Hereinafter, the present disclosure will be described in further detail with reference to the accompanying drawings:
Fig. 1 is an exploded structural view of a trailer hitch coupler according to a first embodiment of the present disclosure;
Fig. 2 is a sectional view of the trailer hitch coupler mounted on a vehicle body in the first embodiment of the present disclosure;
Fig. 3 is a structural schematic diagram of a transmission disc and a driven shaft in the first embodiment of the present disclosure;
Fig. 4 is a status diagram when a locking member is snapped into a driving slot in the first embodiment of the present disclosure;
Fig. 5 is a status diagram when a clamping member is snapped into a locking slot in the first embodiment of the present disclosure;
Fig. 6 is a sectional view when the clamping member is snapped into the driving slot and the locking slot in the first embodiment of the present disclosure;
Fig. 7 is a status diagram when the locking member is released out of the driving slot and the locking slot in the first embodiment of the present disclosure;
Fig. 8 is a sectional view of fitting between the fixed sleeve and the driven shaft in the first embodiment of the present disclosure;
Fig. 9 is a status diagram when a locking member locks a driven shaft from rotation in a second embodiment of the present disclosure;
Fig. 10 is an exploded structural view of a trailer hitch coupler according to a third embodiment of the present disclosure.

### Reference Numerals:

100. hitch; 200. driving shaft; 300. locking member; 310. torsion spring; 320. tooth; 400. transmission disc; 410. driving slot; 420. transmission post; 500. driven shaft; 510. locking slot; 520. arc-shaped transmitting groove; 530. limit boss; 600. connecting plate; 700: housing; 800: fixed sleeve; 810: pin; 820: limit groove; 900: cover plate; 1000. motor assembly.

### DETAILED DESCRIPTION

The present disclosure provides a trailer hitch coupler, comprising a body secured to a vehicle body and a hitch, wherein the body comprises a driving shaft, a locking member, a transmission disc, and a driven shaft, wherein the driven shaft is connected to and rotates synchronously with the hitch, and the driving shaft actuates the transmission disc to idle such that the locking member unlocks the driven shaft to rotate or locks the driven shaft from rotation; wherein when the locking member unlocks the driven shaft to rotate, the driving shaft actuates, via the transmission disc, the driven shaft to rotate such that the hitch switches between a folded position and a unfolded position; when the hitch is at the folded position or at the unfolded position, the locking member locks the driven shaft from rotation.

In the present disclosure, when the driving shaft actuates the transmission disc to idle such that the locking member unlocks the driven shaft to rotate or locks the driven shaft from rotation, the transmission disc is in a rotating status while the driven shaft maintains a stationary status. To use the trailer hitch coupler, the driving shaft first actuates the transmission disc to idle such that the locking member unlocks the driven shaft to rotate, thereby driving the driven shaft to rotate; then, the driving shaft continues rotating to actuate, via the transmission disc, the driven shaft to rotate, wherein rotation of the driven shaft may switch the hitch from the folded position to the unfolded position; next, the driving shaft actuates the transmission disc to idle reversely so as to drive the locking member to lock the driven shaft from rotation, wherein when the driving shaft is actuating the transmission disc to idle reversely, the driven shaft maintains stationary to keep the hitch at the unfolded position, such that after the locking member locks the driven shaft from rotation, the hitch may be locked at the unfolded position, thereby preventing the hitch from sway when a trailer is hitched, thereby enhancing hitching performance. Likewise, the same unlocking and locking principles apply to switching the hitch from the unfolded position to the folded position, except for a different rotating direction. Therefore, the technical solutions of the present disclosure may also lock the hitch to the folded position to prevent sway of the hitch at that position, further enhancing hitching performance of the trailer hitch coupler.

Hereinafter, the technical solutions of the present disclosure will be explained and illustrated through embodiments with reference to the accompanying drawings. However, the embodiments are only some embodiments of the present disclosure, not all of them.

### First Embodiment

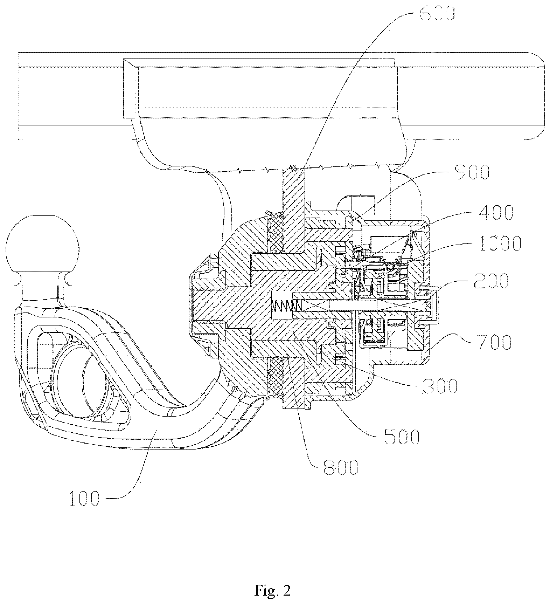

As illustrated in Figs. 1 to 8, a trailer hitch coupler in the embodiment comprises: a body secured to an anti-collision bumper of a vehicle body and a hitch 100, wherein the body comprises a driving shaft 200, a locking member 300, a transmission disc 400, and a driven shaft 500, wherein the driven shaft 500 is connected to and rotates synchronously with the hitch 100, and the driving shaft 200 actuates the transmission disc 400 to idle such that the locking member 300 locks the driven shaft 500 from rotation or unlocks the driven shaft 500 to rotate; while when the locking member 300 unlocks the driven shaft 500 to rotate, the driving shaft 200 actuates, via the transmission disc 400, the driven shaft 500 to rotate such that the hitch 100 switches between the folded position and the unfolded position; when the hitch 100 is at the folded position or at the unfolded position, the locking member 300 locks the driven shaft 500 from rotation.

In this embodiment, when the driving shaft 200 actuates the transmission disc 400 to idle such that the locking member 300 locks the driven shaft 500 from rotation or unlocks the driven shaft 500 to rotate, the transmission disc 400 is in a rotating status while the driven shaft 500 maintains a stationary status. To use the trailer hitch coupler, the driving shaft 200 first actuates the transmission disc 400 to idle such that the locking member 300 unlocks the driven shaft 500 to rotate, thereby moving the driven shaft 500 to rotate; then, the driving shaft 200 continues rotating to actuate, via the transmission disc 400, the driven shaft 500 to rotate, wherein rotation of the driven shaft 500 may switch the hitch 100 from the folded position to the unfolded position; next, the driving shaft 200 actuates the transmission disc 400 to idle reversely so as to drive the locking member 300 to lock the driven shaft 500 from rotation, wherein when the driving shaft 200 is actuating the transmission disc 400 to idle reversely, the driven shaft 500 maintains stationary to keep the hitch 100 at the unfolded position, such that after the locking member 300 locks the driven shaft 500 from rotation, the hitch 100 may be locked at the unfolded position, thereby preventing the hitch 100 from sway when a trailer is hitched, further enhancing hitching performance. Likewise, the same unlocking and locking principles apply to switching the hitch 100 from the unfolded position to the folded position, except for a different rotating direction of the driving shaft 200. Therefore, the technical solutions of the present disclosure may also lock the hitch 100 to the folded position to prevent sway of the hitch 100 at that position, further enhancing hitching performance of the trailer hitch coupler.

Specifically, the body in this embodiment further comprises a connecting plate 600 secured to the anti-collision beam, and a housing 700 snap-fitted to one side of the connecting plate 600; wherein one end of the fixed sleeve 800 is disposed in the housing 700 and the other end of the fixed sleeve 800 passes through the connecting plate 600, both of the fixed sleeve 800 and the housing 700 being secured to the connecting plate 600 via bolts; wherein the fixed sleeve 800 is sleeved over the driven shaft 500 so as to radially position the driven shaft 500, which ensures coaxiality between the driven shaft 500 and the transmission disc 400; wherein one end of the driven shaft 500 is disposed in the housing 700, and the other end thereof extends out of the fixed sleeve 800 to connect with the hitch 100, wherein the portion of the driven shaft 500 connected with the hitch 100 is a non-circular surface fitted with a non-circular hole in the hitch 100 to thereby realize that the driven shaft 500 drives the hitch 100 to rotate synchronously; a cover plate 900 is further securely provided in the housing 700, wherein the transmission disc 400 is movably connected onto the cover plate 900 via a plane bearing; the driving shaft 200, after passing through the cover plate 900 and the plane bearing, is in transmission connection with the transmission disc 400, i.e., the portion of the driving shaft 200 fitted with the non-circular hole in the transmission disc 400 is a non-circular plane. Such a configuration enables the driving shaft 200 to actuate the transmission disc 400 to rotate synchronously.

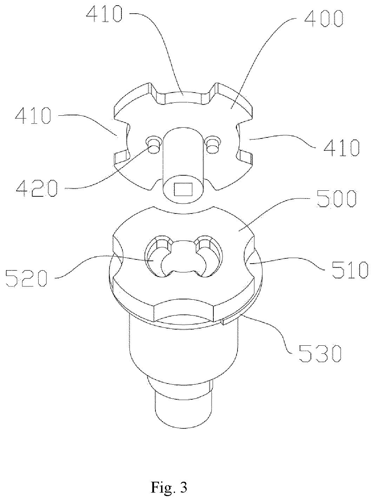

In the embodiment illustrated in Figs. 3 to 7, the locking member 300 is a rotatably mounted claw, wherein the claw is a sectorial plate. A pin 810 is provided on an end face of the fixed sleeve 800 located in the housing 700, and the claw is rotatably mounted on the pin 810. A torsion spring 310 is sleeved over the claw, one end of the torsion spring 310 being secured on the fixed sleeve 800 or the cover plate 900, the other end of the torsion spring 310 being secured to a bump on the claw, such that the claw may be driven to reset by resilience of the torsion spring 310. In this embodiment, a driving slot 410 is further provided at the outer circumferential side of the transmission disc 400, the driving slot 410 being a trapezoidal slot, wherein the opening of the trapezoidal slot is gradually enlarged radially outwardly. One end of the driven shaft 500 proximal to the transmission disc 400 extends radially outwardly to form a circular ring. A locking slot 510 is provided at the outer circumferential side of the circular ring, the locking slot 510 being an arc-shaped slot, wherein the arc-shaped slot matches the arc-shaped surface of the sectorial plate. When the driving shaft 200 actuates the transmission disc 400 to idle, a sidewall of the driving slot 410 is driven to push the claw to rotate out of the driving slot 410 and the locking slot 510, such that the claw unlocks the driven shaft 500 to rotate. When the driving shaft 200 actuates the transmission disc 400 to idle reversely, the claw is automatically reset and snapped into the driving slot 410 and the locking slot 510 under resilience of the torsion spring 310, thereby locking the driven shaft 500 from rotation, which prevents the driven shaft 500 from rotation. Additionally, when the driven shaft 500 is locked, no force is transmitted between the claw and the driving slot 410 such that in a locked status, the driven shaft 500 is disengaged from the transmission disc 400, further avoiding the driving shaft 200 from being stressed all the time, which further extends service life of the driving shaft 200. Particularly when the driving shaft 200 actuates a rotation via a motor assembly, this configuration may also extend service life of the motor assembly. Furthermore, in this embodiment, by configuring the driving slot 410 as a trapezoidal slot, the transmission disc 400 may smoothly actuate the claw to rotate to be released out of the locking slot 510; while by configuring the locking slot 510 to match the arc-shaped surface of the sectorial plate, the effect of locking between the claw and the locking slot 510 may be enhanced in the locked status.

It is understood that in alternative embodiments of the present disclosure, an annular mounting plate surrounding the outside of the driven shaft is provided at the inner sidewall of the housing, wherein the locking member is rotatably mounted on the mounting plate.

To realize idling of the transmission disc 400 relative to the driven shaft 500, a transmission post 420 extending axially is provided on a disc face of the transmission disc 400, and an arc-shaped transmitting groove 520 is provided coaxially on the driven shaft 500, the transmission post 420 being inserted in the arc-shaped transmitting groove 520. In a status where the claw locks the driven shaft 500, the transmission post 420 is disposed at the middle portion of the arc-shaped transmitting groove 520. When the driving shaft 200 actuates the transmission disc 400 to rotate such that the transmission disc 400 drives the transmission post 420 to move from the middle portion of the arc-shaped transmitting groove 520 to the end portion of the arc-shaped transmitting groove 520, the claw is released out of the driving slot 410 and the locking slot 510, thereby unlocking the driven shaft 500 to rotate; when the transmission post 420 is moving from the middle portion of the arc-shaped transmitting groove 520 to the end portion of the arc-shaped transmitting groove 520, since the transmission post 420 is sliding in the arc-shaped transmitting groove 520, which does not apply a torsion to the driven shaft 500, the transmission disc 400 rotates but the driven shaft 500 does not rotate, thereby realizing idling of the transmission disc 400. After the claw unlocks the driven shaft 500 to rotate to continuously actuate the transmission disc 400 to rotate, the transmission post 420 pushes a slot wall of the arc-shaped transmitting groove 520 to actuate the driven shaft 500 to rotate, thereby realizing switching of the hitch 100 between the folded position and the unfolded position, and then the driving shaft 200 actuates the transmission disc 400 to rotate reversely such that when the transmission post 420 is moving from the end portion of the arc-shaped transmitting groove to the middle portion of the arc-shaped transmitting groove, the driven shaft 500 does not rotate so as to maintain the hitch 100 at the folded position or at the unfolded position; when the transmission post 420 moves to the middle portion of the arc-shaped transmitting groove 520, the claw is reset and snapped into the driving slot 410 and the locking slot 510 to thereby lock the driven shaft 500 from rotation.

To actuate the driven shaft 500 to rotate smoothly, in this embodiment, two transmission posts 420 are symmetrically provided about the center of the disc face of the transmission disc 400, and correspondingly, two arc-shaped transmitting grooves 520 are provided on the driven shaft 500. Such a configuration not only ensures smooth rotation of the driven shaft 500, but also ensures the size of the claw, thereby ensuring the effect of locking the driven shaft 500.

To enhance the effect of locking the driven shaft 500 and further prevent sway of the hitch 100 caused by the rotation of the driven shaft 500, in this embodiment, a plurality of driving slots 410 are arranged at uniform intervals at the outer circumferential side of the transmission disc 400; and a plurality of locking slots 510 are provided on the driven shaft 500, wherein the plurality of claws are inserted into the plurality of driving slots 410 and the plurality of locking slots 510, respectively, so as to lock the driven shaft 500 from rotation, whereby to enhance the effect of locking the driven shaft 500 and further prevent sway of the hitch 100 caused by rotation of the driven shaft 500. In this embodiment, the number of the claws, the number of the driving slots 410, and the number of the locking slots 510 are preferably identical, which are all 4. With such a configuration, the effect of locking the driven shaft 500 is enhanced by one-to-one locking fit between the 4 claws and the 4 locking slots 510.

It is understood that in alternative embodiments of the present disclosure, the number of the driving slots and the number of the locking slots may be greater than that of the claws, wherein the claws are snapped into some of the locking slots and the driving slots. For example, if the number of the claws is 3, while the numbers of the driving slots and the locking slots are both 6, then the 3 claws are snapped into three locking slots and three driving slots thereof. Such a configuration may also enhance the effect of locking the driven shaft.

It is understood that in alternative embodiments of the present disclosure, the arc-shaped transmitting groove may also be provided on the disc face of the transmission disc, while the transmission post is provided on the driven shaft, the transmission post being inserted in the arc-shaped transmitting groove. As such, when the locking member locks the driven shaft from rotation, the transmission post is disposed at the middle portion of the arc-shaped transmitting groove; while when the locking member unlocks the driven shaft to rotate, the transmission post abuts the end portion of the arc-shaped transmitting groove.

To better understand the technical solution of the present disclosure, the operating principle of the trailer hitch coupler in this embodiment is explained below:

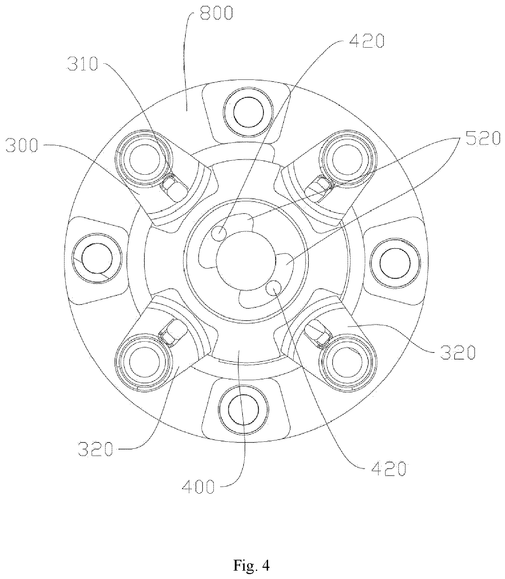

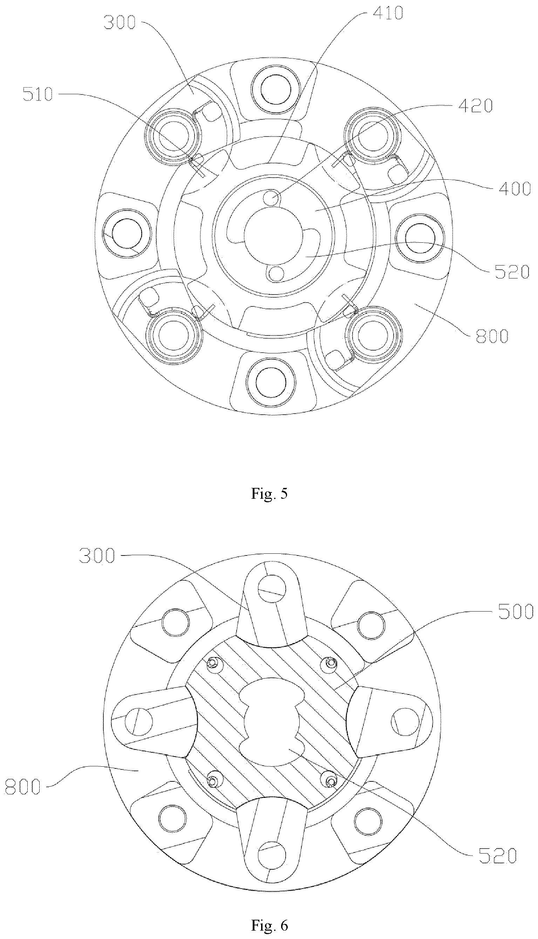

As illustrated in Fig. 4, the locking member 300 locks the driven shaft 500 from rotation, at which point the hitch 100 is at the folded position, and the driving shaft 200 actuates the transmission disc 400 to idle clockwise. When the transmission post 420 is moving from the middle portion of the arc-shaped transmitting groove 520 to the right end portion of the arc-shaped transmitting groove 520, a slot wall of the driving slot 410 is driven to push the claw to rotate towards the outside of the locking slot 510; after the transmission post 420 moves to the right end portion of the arc-shaped transmitting groove 520, the claw is released out of the driving slot 410 and the locking slot 510 (as illustrated in Fig. 5), thereby unlocking the driving shaft 500 to rotate; the driving shaft 200 continuously actuates the transmission disc 400 to rotate clockwise, at which point the driven shaft 500, actuated by the transmission post 420, drives the hitch 100 to rotate synchronously till the unfolded position; afterwards, the driving shaft 200 actuates the transmission disc 400 to idle reversely (i.e., counterclockwise); when the transmission post 420 is moving from the right end of the arc-shaped transmitting groove 520 to the middle portion of the arc-shaped transmitting groove 520, the driven shaft 500 does not rotate to maintain the hitch 100 at the unfolded position; after the transmission post 420 moves to the middle portion of the arc-shaped transmitting groove 520, the driving slot 410 corresponds to the locking slot 510, such that the claw is reset and snapped into the driving slot 410 and the locking slot 510 under resilience of the torsion spring 310, thereby locking the driven shaft 500 from rotation, i.e., preventing the driven shaft 500 from rotation, which further prevents sway of the hitch 100 at the unfolded position.

Likewise, when it is needed to switch the hitch 100 from the unfolded position to the folded position, the driving shaft 200 actuates the transmission disc 400 to idle counterclockwise; when the transmission post 420 is moving from the middle portion of the arc-shaped transmitting groove 520 to the left end portion of the arc-shaped transmitting groove 520, the slot wall of the driving slot 410 is driven to push the claw to rotate towards the outside of the locking slot 510; after the transmission post 420 moves to the end portion of the arc-shaped transmitting groove 520, the claw is released out of the driving slot 410 and the locking slot 510, thereby unlocking the driving shaft 500 to rotate; the driving shaft 200 continuously actuates the transmission disc 400 to rotate counterclockwise, at which point the driven shaft 500, actuated by the transmission post 420, drives the hitch 100 to rotate synchronously till the folded position; afterwards, the driving shaft 200 actuates the transmission disc 400 to idle reversely (i.e., clockwise); when the transmission post 420 is moving from the left end of the arc-shaped transmitting groove 520 to the middle portion of the arc-shaped transmitting groove 520, the driven shaft 500 does not rotate so as to maintain the hitch 100 at the folded position; after the transmission post 420 moves to the middle portion of the arc-shaped transmitting groove 520, the driving slot 410 corresponds to the locking slot 510, such that the claw is reset and snapped into the driving slot 410 and the locking slot 510 under resilience of the torsion spring 310, thereby locking the driven shaft 500 from rotation, i.e., preventing the driven shaft 500 from rotation, which further prevents sway of the hitch 100 at the folded position.

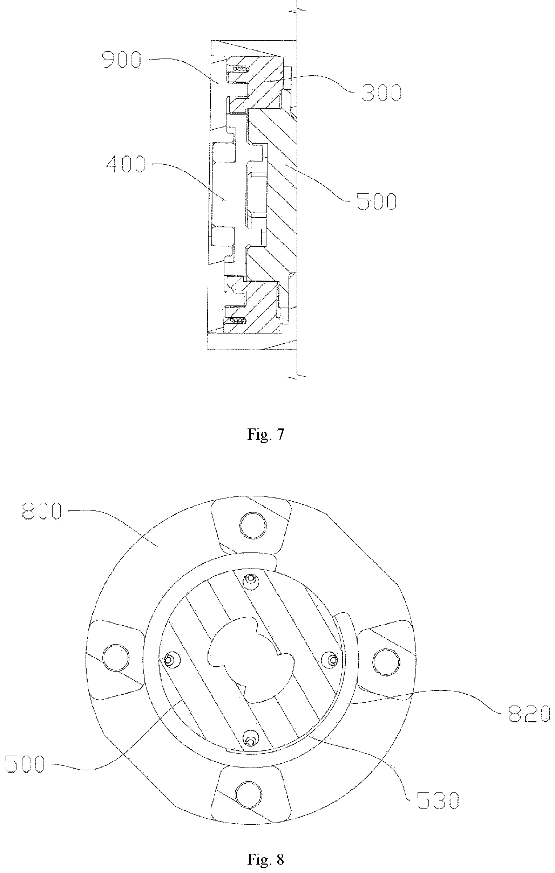

To ensure an exact one-to-one correspondence between the driving slot 410 and the locking slot 510 after reverse idling of the transmission disc 400 so as to snap the claw into the driving slot 410 and the locking slot 510, it is needed to limit a desired rotating angle of the driven shaft 500 when the hitch 100 switches between the folded position and the unfolded position. To ensure accuracy of limiting the rotating angle, as illustrated in the embodiment shown in Fig. 8, an arc-shaped limit groove 820 is provided at the inner circumferential side of the fixed sleeve 800, and a limit boss 530 is provided at the outer circumferential side of the driven shaft 500 fitted with the fixed sleeve 800, wherein the limit boss 530 moves between two ends of the limit groove 820, thereby limiting the rotating angle of the driven shaft 500 by limiting the rotating angle of the limit boss 530, which defines the initial position and the end position of the driven shaft 500, further ensuring the effect of locking the hitch 100 at the folded position and the unfolded position.

It is understood that in alternative embodiments of the present disclosure, the arc-shaped limit groove may also be provided at the outer circumferential side of the driven shaft, while the limit boss projects from the inner circumferential side of the fixed sleeve.

Finally, to enhance user experience of the product, a motor assembly 1000 is further provided in the housing 700 in this embodiment, wherein the driving shaft 200 is disposed in the housing 700 and connected with an output bushing of the motor assembly 1000, wherein the motor assembly 1000 actuates the driving shaft 200 to rotate to switch the hitch 100 between the folded position and the unfolded position. The whole process does not need the user to manually actuate the driving shaft 200 to rotate, thereby enhancing use experience of the product.

### Second Embodiment

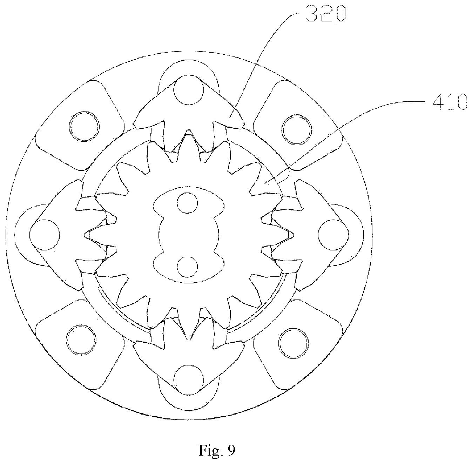

As illustrated in Fig. 9, the second embodiment differs from the first embodiment in that teeth 320 are provided on an arc-shaped surface of the claw, and a toothed slot engaged with the teeth is provided at the outer circumferential side of the transmission disc 400, the transmission disc 400 being preferably a gearwheel, and the toothed slot forming the driving slot 410. Such a configuration may also realize pushing the claw out of the locking slot 510 by a slot wall of the driving slot 410.

### Third Embodiment

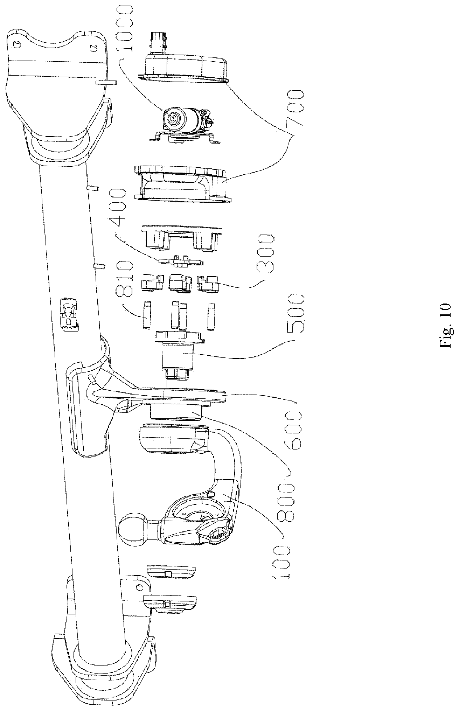

As illustrated in Fig. 10, the third embodiment differs from the first embodiment and the second embodiment in that the fixed sleeve 800 and the connecting plate 600 are integrally machined to form a connecting and fixing plate, wherein the connecting and fixing plate is secured to an anti-collision beam.

### Fourth Embodiment:

The fourth embodiment differs from the first to third embodiments in that no motor assembly is provided in the housing 700; in this case, one end of the driving shaft 200 extends out of the housing 700, such that the driving shaft 200 may also be actuated to rotate to switch the hitch 100 the folded position and the unfolded position when the user rotates the end of the driving shaft 200 extending out of the housing 700 by a wrench or by bare hands, thereby reducing manufacturing cost of the product; further, without the motor assembly, failure of the product due to electric fault may be avoided.

## Claims

1. A trailer hitch coupler comprising a body secured to a vehicle body and a hitch (100), said body comprising a driving shaft (200), a locking member (300), a transmission disc (400), and a driven shaft (500) which is connected to and rotates synchronously with the hitch (100), said driving shaft (200) actuating the transmission disc (400) to idle such that the locking member (300) unlocks the driven shaft (500) to rotate or locks the driven shaft (500) from rotation, wherein, when the locking member (300) unlocks the driven shaft (500) to rotate, the driving shaft (200) actuates, via the transmission disc (400), the driven shaft (500) to rotate such that the hitch (100) switches between a folded position and an unfolded position, and wherein, when the hitch (100) is in the folded position or in the unfolded position, the locking member (300) locks the driven shaft (500) from rotation, **characterized in that** the locking member (300) is a rotatably mounted claw, a driving slot (410) is provided on the transmission disc (400), and a locking slot (510) is provided on the driven shaft (500), such that when the claw is snapped into the driving slot (410) and the locking slot (510), the claw locks the driven shaft (500) from rotation, and when the transmission disc (400) rotates to release the claw out of the driving slot (410) and the locking slot (510), the claw unlocks the driven shaft (500) to rotate.

2. A trailer hitch coupler according to claim 1, wherein the claw is provided with a torsion spring (310) configured to drive the claw to reset; and when the claw is reset, the claw is snapped into the driving slot (410) and the locking slot (510).

3. A trailer hitch coupler according to claim 1, wherein the locking slot (510) is an arc-shaped slot, and the claw is a sectorial plate which has an arc-shaped surface, said arc-shaped surface of the sectorial plate matching the arc-shaped slot, and wherein the driving slot (410) is a trapezoidal slot which has an opening which is gradually enlarged radially outwardly; or, the arc-shaped surface of the sectorial plate is provided with teeth (320), and a toothed slot engaged with the teeth (320) is provided at an outer circumferential side of the transmission disc (400), said toothed slot forming said driving slot (410).

4. A trailer hitch coupler according to claim 2, wherein a transmission post (420) is provided on the transmission disc (400), and an arc-shaped transmitting groove (520) is provided coaxially on the driven shaft (500), said the transmission post (420) being inserted into the arc-shaped transmitting groove (520), such that when the transmission disc (400) drives the transmission post (420) to move from a middle portion of the arc-shaped transmitting groove (520) to an end portion of the arc-shaped transmitting groove (520), the claw is released out of the driving slot (410) and the locking slot (510).

5. A trailer hitch coupler according to claim 2, wherein a plurality of the driving slots (410) are arranged at uniform intervals in an outer circumferential side of the transmission disc (400), and a plurality of the locking slots (510) are provided on the driven shaft (500), and wherein a plurality of the claws are respectively snapped into the plurality of driving slots (410) and the plurality of locking slots (510) so as to lock the driven shaft (500) from rotation.

6. A trailer hitch coupler according to claim 1, wherein the body further comprises a fixed sleeve (800) which is fixed relative to the vehicle body and sleeved outside the driven shaft (500), said locking member (300) being rotatably mounted on an end face of the fixed sleeve (800).

7. A trailer hitch coupler according to claim 6, wherein a limit groove (820) is provided at one of an inner circumferential side of the fixed sleeve (800) and an outer circumferential side of the driven shaft (500), wherein a limit boss (530) is inserted into the limit groove (820), said limit boss (530) being provided at the other one of the inner circumferential side of the fixed sleeve (800) and the outer circumferential side of the driven shaft (500), and wherein said limit boss (530) moves between two ends of the limit groove (820).

8. A trailer hitch coupler according to any one of claims 1 to 7, wherein the body comprises a housing (700) and a motor assembly (1000) disposed in the housing (700), wherein the driving shaft (200), the transmission disc (400), and the locking member (300) are disposed in the housing (700), said motor assembly (1000) actuating the driving shaft (200) to rotate; and wherein one end of the driven shaft (500) is disposed in the housing (700) and the other end of the driven shaft (500) extends out of the housing (700) to connect with the hitch (100).

9. A trailer hitch coupler according to any one of claims 1 to 7, wherein the body comprises a housing (700) that covers the outside of the transmission disc (400) and the locking member (300), wherein one end of the driven shaft (500) is disposed in the housing (700), and the other end of the driven shaft (500) extends out of the housing (700) to connect with the hitch (100), and wherein one end of the driving shaft (200) is disposed in the housing (700) and the other end of the driving shaft (200) extends out of the housing (700).

## Patentansprüche

1. Eine Anhängerkupplung, umfassend einen Körper, der an einer Fahrzeugkarosserie und einer Kupplung (100) befestigt ist, wobei der Körper eine Antriebswelle (200), ein Verriegelungselement (300), eine Übertragungsscheibe (400) und eine angetriebene Welle (500) umfasst, die mit der Kupplung (100) verbunden ist und sich synchron mit dieser dreht, wobei die Antriebswelle (200) die Übertragungsscheibe (400) betätigt, um im Leerlauf zu laufen, so dass das Verriegelungselement (300) die angetriebene Welle (500) zur Drehung entriegelt, oder die angetriebene Welle (500) gegen Drehung sperrt, wobei, wenn das Verriegelungselement (300) die angetriebene Welle (500) zur Drehung entriegelt, die Antriebswelle (200) über die Übertragungsscheibe (400) die angetriebene Welle (500) zur Drehung bringt, so dass die Kupplung (100) zwischen einer eingeklappten Position und einer ausgeklappten Position wechselt, und wobei, wenn sich die Kupplung (100) in der eingeklappten Position oder in der ausgeklappten Position befindet, das Verriegelungselement (300) die angetriebene Welle (500) gegen Drehung sperrt, **dadurch gekennzeichnet, dass** das Verriegelungselement (300) eine drehbar angebrachte Klaue ist, ein Antriebsschlitz (410) an der Übertragungsscheibe (400) vorgesehen ist und ein Verriegelungsschlitz (510) an der angetriebenen Welle (500) vorgesehen ist, so dass, wenn die Klaue in den Antriebsschlitz (410) und den Verriegelungsschlitz (510) eingerastet ist, die Klaue die angetriebene Welle (500) gegen Drehung sperrt, und wenn sich die Übertragungsscheibe (400) dreht, um die Klaue aus dem Antriebsschlitz (410) und dem Verriegelungsschlitz (510) freizugeben, die Klaue die angetriebene Welle (500) zur Drehung entriegelt.

2. Anhängerkupplung nach Anspruch 1, wobei die Klaue mit einer Torsionsfeder (310) versehen ist, die so konfiguriert ist, dass sie die Klaue zur Rückstellung antreibt; und wenn die Klaue zurückgestellt ist, ist die Klaue in den Antriebsschlitz (410) und den Verriegelungsschlitz (510) eingerastet.

3. Anhängerkupplung nach Anspruch 1, wobei der Verriegelungsschlitz (510) ein bogenförmiger Schlitz ist und die Klaue eine Sektorplatte ist, die eine bogenförmige Oberfläche aufweist, wobei die bogenförmige Oberfläche der Sektorplatte mit dem bogenförmigen Schlitz übereinstimmt, und wobei der Antriebsschlitz (410) ein trapezförmiger Schlitz ist, der eine Öffnung aufweist, die sich allmählich radial nach außen vergrößert; oder die bogenförmige Oberfläche der Sektorplatte mit Zähnen (320) versehen ist und ein mit den Zähnen (320) in Eingriff stehender gezahnter Schlitz an einer äußeren Umfangsseite der Übertragungsscheibe (400) vorgesehen ist, wobei der gezahnte Schlitz den Antriebsschlitz (410) bildet.

4. Anhängerkupplung nach Anspruch 2, wobei ein Übertragungsstift (420) an der Übertragungsscheibe (400) vorgesehen ist und eine bogenförmige Übertragungsnut (520) koaxial an der angetriebenen Welle (500) vorgesehen ist, wobei der Übertragungsstift (420) in die bogenförmige Übertragungsnut (520) eingesetzt ist, so dass, wenn die Übertragungsscheibe (400) den Übertragungsstift (420) dazu antreibt, sich von einem mittleren Abschnitt der bogenförmigen Übertragungsnut (520) zu einem Endabschnitt der bogenförmigen Übertragungsnut (520) zu bewegen, die Klaue aus dem Antriebsschlitz (410) und dem Verriegelungsschlitz (510) freigegeben wird.

5. Anhängerkupplung nach Anspruch 2, wobei eine Vielzahl von Antriebsschlitzen (410) in gleichmäßigen Abständen in einer äußeren Umfangsseite der Übertragungsscheibe (400) angeordnet sind und eine Vielzahl von Verriegelungsschlitzen (510) an der angetriebenen Welle (500) vorgesehen sind, und wobei eine Vielzahl von Klauen jeweils in die Vielzahl der Antriebsschlitze (410) und die Vielzahl der Verriegelungsschlitze (510) eingerastet sind, um die angetriebene Welle (500) gegen Drehung zu sperren.

6. Anhängerkupplung nach Anspruch 1, wobei der Körper ferner eine feststehende Hülse (800) umfasst, die relativ zum Fahrzeugkörper befestigt ist und die angetriebene Welle (500) außerhalb umhüllt, wobei das Verriegelungselement (300) drehbar an einer Endfläche der festen Hülse (800) angebracht ist.

7. Anhängerkupplung nach Anspruch 6, wobei eine Begrenzungsnut (820) entweder an einer inneren Umfangsseite der feststehenden Hülse (800) oder an einer äußeren Umfangsseite der angetriebenen Welle (500) vorgesehen ist, wobei eine Begrenzungsnase (530) in die Begrenzungsnut (820) eingesetzt ist, wobei die Begrenzungsnase (530) an der anderen inneren Umfangsseite der festen Hülse (800) und der äußeren Umfangsseite der angetriebenen Welle (500) vorgesehen ist, und wobei sich die Begrenzungsnase (530) zwischen zwei Enden der Begrenzungsnut (820) bewegt.

8. Anhängerkupplung nach einem der Ansprüche 1 bis 7, wobei der Körper ein Gehäuse (700) und eine in dem Gehäuse (700) angeordnete Motorbaugruppe (1000) umfasst, wobei die Antriebswelle (200), die Übertragungsscheibe (400) und das Verriegelungselement (300) in dem Gehäuse (700) angeordnet sind, und wobei die Motorbaugruppe (1000) die Antriebswelle (200) in Drehung versetzt; und wobei ein Ende der angetriebenen Welle (500) in dem Gehäuse (700) angeordnet ist und das andere Ende der angetriebenen Welle (500) aus dem Gehäuse (700) herausragt, um mit der Kupplung (100) verbunden zu sein.

9. Anhängerkupplung nach einem der Ansprüche 1 bis 7, wobei der Körper ein Gehäuse (700) umfasst, das die Außenseite der Übertragungsscheibe (400) und das Verriegelungselement (300) abdeckt, wobei ein Ende der angetriebenen Welle (500) in dem Gehäuse (700) angeordnet ist und das andere Ende der angetriebenen Welle (500) aus dem Gehäuse (700) herausragt, um mit der Kupplung (100) verbunden zu sein, und wobei ein Ende der Antriebswelle (200) in dem Gehäuse (700) angeordnet ist und das andere Ende der Antriebswelle (200) aus dem Gehäuse (700) herausragt.

## Revendications

1. Coupleur d'attelage de remorque comprenant un corps fixé à une carrosserie de véhicule et un attelage (100), ledit corps comprenant un arbre d'entraînement (200), un élément de verrouillage (300), un disque de transmission (400) et un arbre entraîné (500) qui est relié à l'attelage (100) et tourne de manière synchrone avec celui-ci, ledit arbre d'entraînement (200) actionnant le disque de transmission (400) pour qu'il tourne au ralenti de sorte que l'élément de verrouillage (300) déverrouille l'arbre entraîné (500) pour qu'il tourne ou verrouille l'arbre entraîné (500) de la rotation, dans lequel, lorsque l'élément de verrouillage (300) déverrouille l'arbre entraîné (500) en rotation, l'arbre d'entraînement (200) actionne, via le disque de transmission (400), l'arbre entraîné (500) en rotation de sorte que l'attelage (100) bascule entre une position repliée et une position dépliée, et dans lequel, lorsque l'attelage (100) est en position repliée ou en position dépliée, l'élément de verrouillage (300) verrouille l'arbre entraîné (500) de la rotation, **caractérisé en ce que** l'élément de verrouillage (300) est une griffe montée rotative, une fente d'entraînement (410) est prévue sur le disque de transmission (400), et une fente de verrouillage (510) est prévue sur l'arbre entraîné (500), de sorte que lorsque la griffe est encliquetée dans la fente d'entraînement (410) et la fente de verrouillage (510), la griffe verrouille l'arbre entraîné (500) de la rotation, et lorsque le disque de transmission (400) tourne pour libérer la griffe de la fente d'entraînement (410) et de la fente de verrouillage (510), la griffe déverrouille l'arbre entraîné (500) pour qu'il tourne.

2. Coupleur d'attelage de remorque selon la revendication 1, dans lequel la griffe est munie d'un ressort de torsion (310) configuré pour entraîner la griffe à se réinitialiser ; et lorsque la griffe est réinitialisée, la griffe est encliquetée dans la fente d'entraînement (410) et la fente de verrouillage (510).

3. Coupleur d'attelage de remorque selon la revendication 1, dans lequel la fente de verrouillage (510) est une fente en forme d'arc, et la griffe est une plaque sectorielle qui a une surface en forme d'arc, ladite surface en forme d'arc de la plaque sectorielle correspondant à la fente en forme d'arc, et dans lequel la fente d'entraînement (410) est une fente trapézoïdale qui a une ouverture qui s'élargit progressivement radialement vers l'extérieur ; ou, la surface en forme d'arc de la plaque sectorielle est pourvue de dents (320), et une fente dentée en prise avec les dents (320) est prévue au niveau d'un côté circonférentiel extérieur du disque de transmission (400), ladite fente dentée formant ladite fente d'entraînement (410).

4. Coupleur d'attelage de remorque selon la revendication 2, dans lequel un poste de transmission (420) est prévu sur le disque de transmission (400), et une rainure de transmission en forme d'arc (520) est prévue coaxialement sur l'arbre entraîné (500), ledit poste de transmission (420) étant inséré dans la rainure de transmission en forme d'arc (520), de sorte que lorsque le disque de transmission (400) entraîne le poste de transmission (420) pour se déplacer d'une partie centrale de la rainure de transmission en forme d'arc (520) à une partie d'extrémité de la rainure de transmission en forme d'arc (520), la griffe est libérée de la fente d'entraînement (410) et de la fente de verrouillage (510).

5. Coupleur d'attelage de remorque selon la revendication 2, dans lequel une pluralité de fentes d'entraînement (410) sont agencées à des intervalles uniformes dans un côté circonférentiel extérieur du disque de transmission (400), et une pluralité de fentes de verrouillage (510) sont prévues sur l'arbre entraîné (500), et dans lequel une pluralité de griffes sont respectivement encliquetées dans la pluralité de fentes d'entraînement (410) et la pluralité de fentes de verrouillage (510) de manière à verrouiller l'arbre entraîné (500) de la rotation.

6. Coupleur d'attelage de remorque selon la revendication 1, dans lequel le corps comprend en outre un manchon fixe (800) qui est fixe par rapport à la carrosserie de véhicule et qui est manchonné à l'extérieur de l'arbre entraîné (500), ledit élément de verrouillage (300) étant monté de manière rotative sur une face d'extrémité du manchon fixe (800).

7. Coupleur d'attelage de remorque selon la revendication 6, dans lequel une rainure de limite (820) est prévue au niveau de l'un d'un côté circonférentiel intérieur du manchon fixe (800) et d'un côté circonférentiel extérieur de l'arbre entraîné (500), dans lequel un bossage de limite (530) est inséré dans la rainure de limite (820), ledit bossage de limite (530) étant prévu au niveau de l'autre du côté circonférentiel intérieur du manchon fixe (800) et du côté circonférentiel extérieur de l'arbre entraîné (500), et dans lequel ledit bossage de limite (530) se déplace entre deux extrémités de la rainure de limite (820).

8. Coupleur d'attelage de remorque selon l'une quelconque des revendications 1 à 7, dans lequel le corps comprend un boîtier (700) et un ensemble moteur (1000) disposé dans le boîtier (700), dans lequel l'arbre d'entraînement (200), le disque de transmission (400) et l'élément de verrouillage (300) sont disposés dans le boîtier (700), ledit ensemble moteur (1000) actionnant l'arbre d'entraînement (200) pour qu'il tourne ; et dans lequel une extrémité de l'arbre entraîné (500) est disposée dans le boîtier (700) et l'autre extrémité de l'arbre entraîné (500) s'étend hors du boîtier (700) pour se connecter à l'attelage (100).

9. Coupleur d'attelage de remorque selon l'une quelconque des revendications 1 à 7, dans lequel le corps comprend un boîtier (700) qui recouvre l'extérieur du disque de transmission (400) et de l'élément de verrouillage (300), dans lequel une extrémité de l'arbre entraîné (500) est disposée dans le boîtier (700), et l'autre extrémité de l'arbre entraîné (500) s'étend hors du boîtier (700) pour se connecter avec l'attelage (100), et dans lequel une extrémité de l'arbre d'entraînement (200) est disposée dans le boîtier (700) et l'autre extrémité de l'arbre d'entraînement (200) s'étend hors du boîtier (700).
